# EUROPEAN PATENT SPECIFICATION

(11) **EP 2 691 880 B1**
(45) Date of publication and mention of the grant of the patent: **08.05.2019**
(21) Application number: 12704210.9
(22) Date of filing: 07.02.2012
(51) Int. Cl.: G06F 16/957

(54) **CROSS-COMPILING SWF TO HTML USING AN INTERMEDIATE FORMAT**
QUERKOMPILIERUNG VON SWF ZU HTML EIN ZWISCHENFORMAT NUTZEND
COMPILATION CROISÉE DE SWF EN HTML À L'AIDE D'UN FORMAT INTERMÉDIAIRE

(30) Priority: 28.03.2011 US 201113073916
(43) Date of publication of application: 05.02.2014
(73) Proprietor: Google LLC, Mountain View, CA 94043 (US)
(72) Inventor: SENSTER, Pieter, London W11 4TJ (GB)
(74) Representative: Betten & Resch
(86) International application number: PCT/US2012/024121
(87) International publication number: WO 2012/134633

(56) References cited:
- US-A1- 2010 271 374
- Anonymous: "Wallaby", , 11 March 2011 (2011-03-11), pages 1-3, XP55023600, Retrieved from the Internet: URL:http://labs.adobe.com/wiki/index.php?t itle=Wallaby&oldid=86341 [retrieved on 2012-04-02]
- Alex Young: "Gordon: A Flash JavaScript Runtime", , 13 January 2010 (2010-01-13), pages 1-1, XP55023526, Retrieved from the Internet: URL:http://web.archive.org/web/20100117094 050/http://dailyjs.com/2010/01/13/gordon/ [retrieved on 2012-04-02]
- Anonymous: "SWF", , 10 March 2011 (2011-03-10), pages 1-3, XP55023668, Retrieved from the Internet: URL:https://secure.wikimedia.org/wikipedia /en/w/index.php?title=SWF&oldid=418196542 [retrieved on 2012-04-03]
- Marcel Gordon: "Swiffy: convert SWF files to HTML5", , 28 June 2011 (2011-06-28), pages 1-4, XP55023709, Retrieved from the Internet: URL:http://web.archive.org/web/20110710140 650/http://googlecode.blogspot.com/2011/06 /swiffy-convert-swf-files-to-html5.html [retrieved on 2012-04-03]

## Description

### BACKGROUND

The following relates to an alternative approach for playing SWF content on portable devices. The alternative approach generates code for Web technologies such as SVG and HTML5. SWF players are available for desktop platforms including Windows, Macintosh OSX, Linux, and Solaris, and browsers for those platforms including Internet Explorer, Firefox, Mozilla, Netscape, Opera, Safari, SeaMonkey, and Chrome. However, not all mobile platforms currently support this format. Furthermore, performance issues of SWF players may limit the desirability of these proprietary players on both mobile and desktop platforms

An increasing number of platforms support Web technologies for handling vector graphics such as SVG. There is a need for a utility that can handle graphics and animations developed in the SWF format. An approach of directly compiling an SWF file into SVG and JavaScript® has several drawbacks. The SVG handling may have to be implemented in two places: in the compiler itself for static SVG generation, and in JavaScript® for dynamic SVG animation in the client.

A further alternative of interpreting the SWF file itself using JavaScript® would also have drawbacks, such as that the computational load is placed on the client. Complex transformation, such as video and audio recoding or transcoding would have to be performed every time a user visits the page in the browser.

*"*Wallaby", March 11, 2011, pages 1.3 (XP0550236000) refers to an application to convert Adobe Flash Professional CS5 files (.FLA) to HTML5 having a simple UI, wherein several features are not supported such as ActionScript, movies, and sound.

Alex Young: "Gordon: A Flash JavaScript Runtime", January 13, 2010 (XP055023709) presents a runtime that parses a SWF file and then draws, using SVG and JavaS cript.

US 2010/0271374 A1 discloses a a method and device for converting or transforming a shape definition specified in a SWF file into a vector graphics shape definition.

### BRIEF SUMMARY

The invention is defined by the independen claims. Dependent claims specify embodiments thereof.

A data processing apparatus and method are described for rendering multimedia content for hierarchical structured documents, including a cross-compiler that parses a formatted multimedia object, performs conversions on video data and audio data contained in the formatted object, and generates an intermediate object representing the data from the formatted multimedia object, and a runtime-script that receives the intermediate object and dynamically generates and modifies scaleable vector graphic nodes in a hierarchical structured document for rendering of the multimedia content by a web browser.

These and other aspects are described in detail with respect to the drawings.

### BRIEF DESCRIPTION OF THE DRAWINGS

The accompanying drawings constitute part of this specification. In the drawings,
FIG. 1 is a diagram of an example network environment;
FIG. 2 is a block diagram showing processes involved in conversion of a SWF file into an intermediate format and the use of the intermediate format in generating an animation;
FIG. 3 is a block diagram that shows an example architecture for performing the processes of FIG. 2;
FIG. 4 is a block diagram for an example of a portable device;
FIG. 5 is a block diagram of a server computer;
FIG. 6 is a flowchart of a process performed by Cross-Compiler;
FIGs. 7A and 7B provide examples of warning messages;
FIG. 8 is a flow chart of the high-level processes performed by the Intermediate-Code Runtime;
FIG. 9 shows a portion of a HTML document to initialize the Intermediate-Code Runtime;
FIG. 10 is a flowchart of a process of constructing a scene;
FIG. 11 is a flowchart of the process of creating a MovieClip;
FIGs. 12A, 12B and 12C are a flowchart of the process of constructing a MovieClip;
FIG. 13 is a flowchart of a process for performing an animation;
FIG. 14 is a flowchart showing details of the execute control tag handlers step of FIG. 13;
FIG. 15 is a flowchart showing details of the execute action tag handlers step of FEI. 13.
FIG. 16 shows an example SWF file;
FIG. 17 shows an example Intermediate-Code Object;
FIG. 18 shows an example of SVG code;
FIG. 19 shows an example display based on the SWF file of FIG. 16; and
FIG. 20 illustrates an example of ActionScript 2.0 that has been compiled into a SWF.

### DETAILED DESCRIPTION

An SWF file can be played back using an SWF player. Adobe® provides the Adobe® Flash® Player for playing SWF files on multiple platforms. A description of an SWF file can be found in the SWF specification, Version 10, November 2008. A Cross-Compiler and playback utility are disclosed for use by those platforms in which an SWF player is not available. The playback utility uses widely supported Web technologies, including Scalable Vector Graphics (SVG) (see Scalable Vector Graphics 1.1 Specification, W3C Recommendation of 14 January 2003) and HTML5.

The Cross-Compiler produces an intermediate structure and performs computationally-intensive transformations. The playback utility converts the intermediate structure into SVG tags that can be interpreted by a Web browser, as well as generates necessary actions associated with SWF animations. The playback utility takes care of all SVG handling. A further aspect of the Cross-Compiler and playback utility is the division of work between computationally intensive tasks and tasks necessary to render multimedia data on, for example, a small handheld device having limited memory and processing capability.

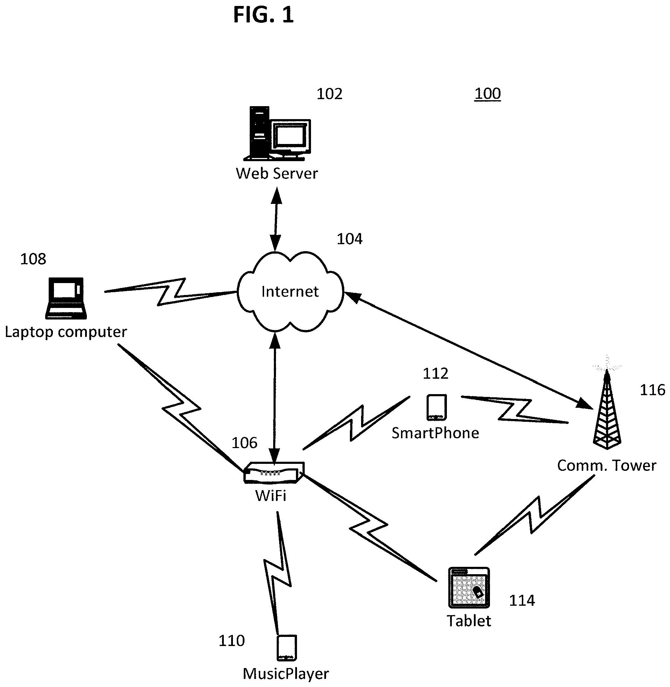

FIG. 1 shows an example network environment 100, in which various portable devices may be wirelessly connected to the Internet 104, as well as other wireless communications networks. For example, a laptop computer 108 can connect to the Web server 102 through more than one communication protocol, including a wireless LAN or WiFi 106 (IEEE 802.11-2007), or through a cellular carrier 116. A smartphone 112 can communicate with the Web server 102 through a cellular carrier 116 or through a WiFi network 106. A tablet computer 114 can connect with the Web server 102 through a WiFi network 106, or through a cellular carrier 116. A portable music player 110 can communicate with a Web server 102 through a WiFi network 106, or through a host computer (not shown).

### SYSTEM ARCHITECTURE

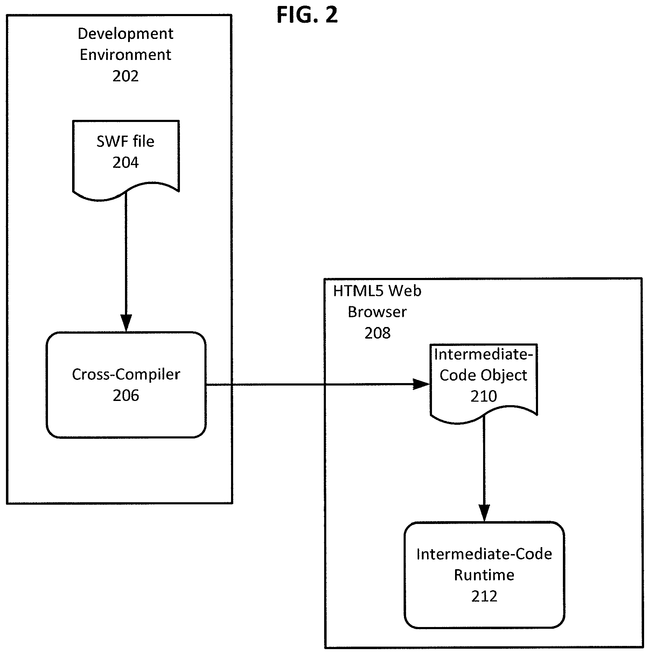

A SWF file is a binary representation of a graphic or animation. FIG. 2 is a block diagram of processes 200 for rendering a SWF file, for a Web browser that can handle Web technology such as SVG and HTML5. The Web browser should be capable of rendering HTML5 having SVG tags. The processes 200 include a Cross-Compiler 204 and an Intermediate-Code Runtime 210. The Cross-Compiler 204 converts the SWF file 202 into an intermediate structure 208. The intermediate structure 208 provided by the Cross-Compiler 204 can be a JSON object (for JavaScript Object Notation), or XML document. The intermediate structure 208 is a data structure that organizes data produced by the Cross-Compiler 204. The Intermediate-Code Runtime 314 can be a JavaScript® program that generates SVG nodes from data in the intermediate structure 208 and performs play back operation for a frame or animation. The SVG nodes are interpreted by a Web browser 312 capable of rendering HTML5 and SVG.

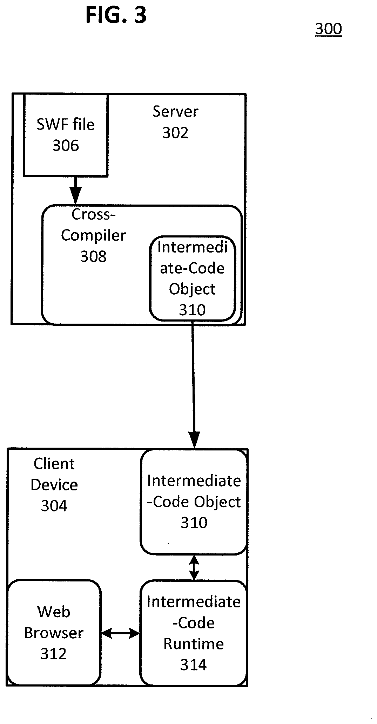

The processes in FIG. 2 can be performed in an arrangement such as that shown in FIG. 3. FIG. 3 shows an architecture 300 having a server 302 and a client 304. As had been shown in FIG. 1, a server communicates with several and a variety of types of portable devices. FIG. 3 shows an arrangement having one client device for simplicity. In addition, although FIG. 3 shows a server computer 302, the server 302 can be a system of servers and other supporting devices, such as a database system backend.

On the server computer 302, the Cross-Compiler 308 is capable of generating JSON objects for each of the variety of platforms. The Cross-Compiler 308 is also capable of performing transformations, including vector conversion, conversion of image formats, font conversions, and video and audio recoding or transcoding for compatibility with Web browsers running on the portable devices. Furthermore, the Cross-Compiler 308 may perform error checking and generates warning and error messages with regard to conversion. As shown in FIG. 3, on the client device 304, the Intermediate-Code Runtime 314 performs remaining processing based on an Intermediate-Code Object obtained from the Cross-Compiler 308. The Intermediate-Code Runtime 314 is executed in a Web browser 312.

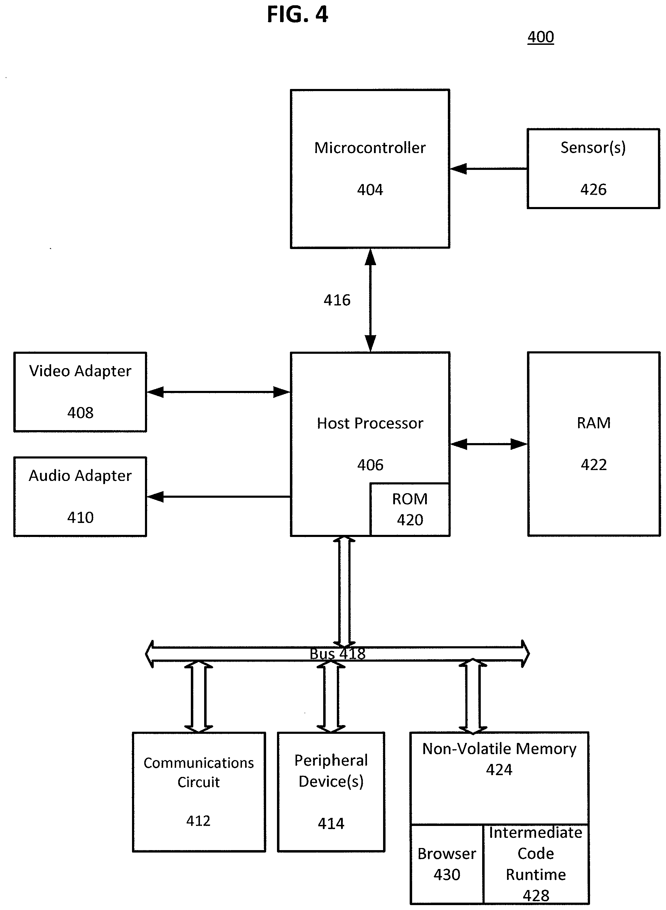

FIG. 4 is a block diagram for an example portable device, as a client 304. The portable device 400 includes a microcontroller 404 that is in communication with a host processor 406 by way of a bus 416. The host processor 406 can transmit data to a communications module 412, which provides communication through external networks.

In addition, the host processor 406 provides processing for a video adapter 408 and audio device 410. A principal bus 418 provides communications between the host processor 406 and peripheral devices 414. A Web browser 430 and the Intermediate-Code Runtime 428 may be stored in an internal memory of the portable device 400, such as non-volatile memory 424. Alternatively, the Intermediate-Code Runtime can be provided on a removable memory device, such as a secure digital memory device (not shown).

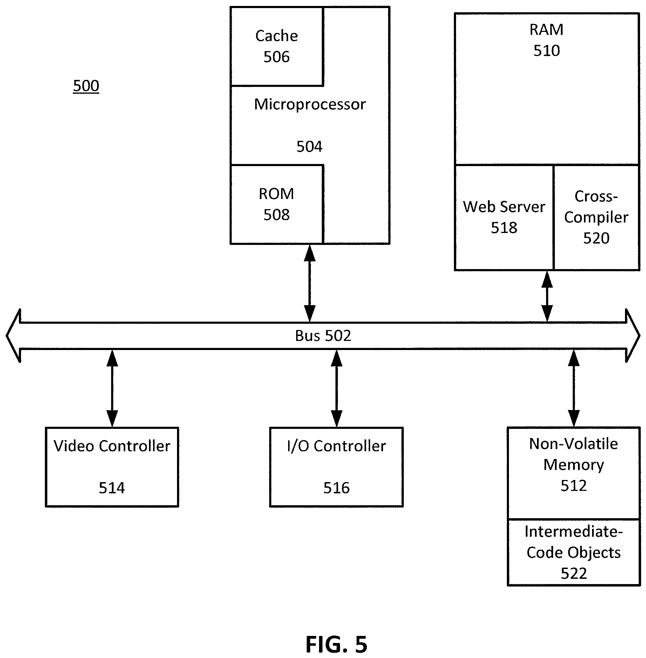

As can be seen in FIG. 5 a server computer 500 may include a microprocessor 504 provided with a cache 506, a read only memory (ROM) 508, volatile memory (RAM) 510, and one or more large storage devices (Non-volatile memory) 512, with the memory devices communicating data over a bus 502. The server computer 500 may also include a display device 514, and I/O devices 518 that communicate with the microprocessor 504 by way of display controller and I/O controller 516 devices. The Cross-Compiler 520 can perform conversion operations in RAM 510 and generate Intermediate-Code Objects that are stored in a non-volatile memory 512. Alternatively, an Intermediate-Code Object can be maintained in RAM 510 for transmission by the Web Server 518.

### CROSS-COMPILER

There are structures and methods defined in SWF that are not supported by the SVG specification. In addition, SWF includes tags that have been modified as alternative versions. The Cross-Compiler 204 performs conversion operations that accommodates for differences between SWF and SVG. The Cross-Compiler 204 simplifies the differences between versions of SWF tags, by consolidating into a single version of tags. Subsequently, the Cross-Compiler 204 can produce an Intermediate-Code Object having fewer tags, as well as having fewer tag types, than in the original SWF file.

SWF vector graphics are not fully supported in SVG. Vector graphics in a SWF file are defined in a SWF-specific format (e.g., in a DefineShape tag). SWF allows two fillstyles for each edge: one for the lefthand and one for the righthand side of the edge. On the other hand, the SVG specification does not support two fillstyles for each edge. The Cross-Compiler 204 can split the path into pieces such that each piece has at most a single fillstyle and linestyle. Furthermore, the Cross-Compiler 204 generates a path definition as SVG vector data.

In addition, in SWF, the current fillstyles and linestyle may change in the middle of a path. For example, a DefineShape tag may define two edges with a red linestyle, followed by a SWF StyleChangeRecord that sets the linestyle to blue, and then two more edges that are painted blue. In SVG, all edges of a path have the same fill style or line style. Cross-Compiler 204 can split the SWF path into pieces to ensure that each piece is a valid SVG path.

The Cross-Compiler 204 replaces tags having several variants in SWF with a single tag. The DefineShape, DefineShape2, DefineShape3, and DefineShape4 tags in SWF are all mapped to a single DefineShape. SWF tags that are simplified include, PlaceObject, RemoveObject, DefineFontInfo, DefineFont, DefineButton, DefineBitsJPEG, DefineBitsLossLess, and DefineText.

In the case of DefineFontInfo, there is no representation of that tag in the Intermediate-Code Object. The Cross-Compiler 204 adds the font information present in the DefineFontInfo to the font definition to which the DefineFontInfo tag refers (by its character ID). Subsequently, the information of a DefineFontInfo and DefineFont (2/3) pair is combined into one DefineFont tag.

In a similar manner, in the case of DefineButtonCxform, the color transformation in the DefineButtonCxform is added to the Intermediate-Code DefineButton. A similar case occurs for DefineBits and JPEGTables. The information in the JPEGtables tag is used to construct a JPEG image from the DefineBits tag. The JPEGTables data itself is not represented as a separate tag in the Intermediate-Code.

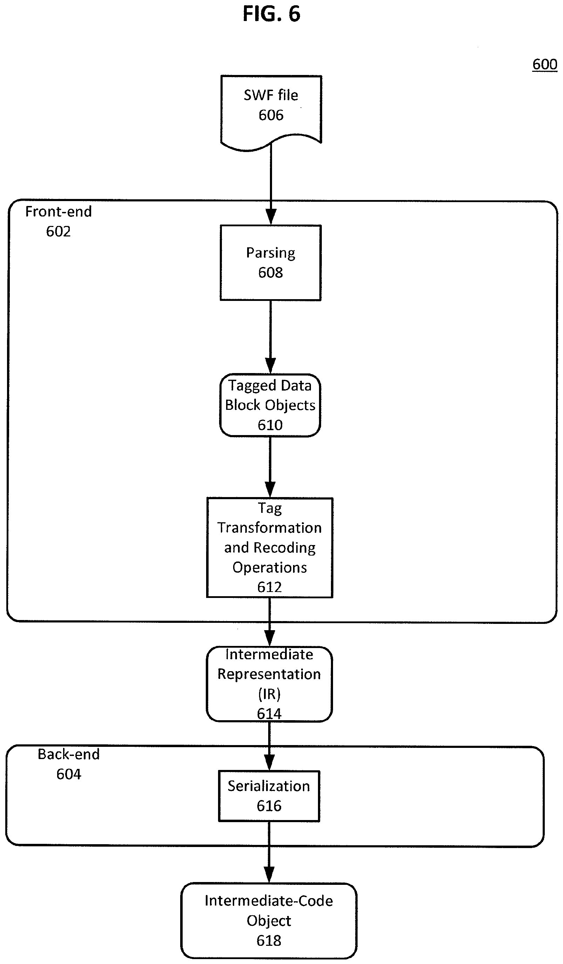

A flowchart of a process performed by the Cross-Compiler 204 is shown in FIG. 6. The Cross Compiler 204 has a front end 602 for producing an Intermediate-Code intermediate representation and a back end 604 for serialization to produce the Intermediate-Code object. In the front end 602, the Cross-Compiler parses, at step 608, the SWF file 606. The SWF file 606 is in binary format. The parser section of the Cross-Compiler analyzes the binary data in the SWF file 606 and identifies the tagged data blocks. Types of tagged data blocks are defined in the SWF specification. Then, for each data block, the parser creates a SWF tag. One of the data blocks contains header information. The Cross-Compiler next generates, at step 610, Intermediate-Code tagged data block objects that represent the SWF tags in a hierarchical structure. At step 612, tags are transformed to their counterpart in the intermediate representation (Intermediate-Code IR), at step 614.

In addition to SWF tags that have been transformed into JSON key:value pairs, the Cross-Compiler 204 performs transformations to produce elements that are compatible with HTML5. The Cross-Compiler 204 produces a DefineImage object. The Tag transformation step 614 also includes processes including Image transformation, video/audio recoding and transcoding, support checking and vector graphics conversion. The Cross-Compiler 204 determines whether or not there is support for each SWF tag encountered, and if a tag is not supported, the Cross-Compiler will provide a warning message. The messages aid a developer in determining which features will not be provided in browsers that do not include the Adobe® Flash® Player.

In the case of image transformation, SWF files may contain encodings in DefineBitsLossless and DefineBitsLossless2 tags. Some browsers may only support JPEG, PNG or GIF images. The Cross-Compiler 204 recodes images in the SWF file into image formats supported by browsers.

In the case of audio, SWF files may contain audio in several formats including uncompressed, ADPCM, MP3, Nellymoser and Speex. Most browsers support only MP3. The Cross-Compiler 204 recodes audio in SWF files into formats supported by browsers, such as MP3.

Similarly, in the case of video, the content may be recoded into several different formats. A SWF file may contain video in h.263 or VP6 formats. The Cross-Compiler 204 can recode the video into h.264, which is used by iOS, or WebM, which is used by Google Chrome, Firefox and Opera.

The Intermediate-code Runtime 210 can determine which format of images, audio and video to load depending on the platform and browser being used on the portable device.

At step 616, the intermediate representation is serialized to produce the Intermediate-Code Object, at step 618. During serialization, each tag in the intermediate representation is outputted as a JSON object, including key:value pairs and arrays. All JSON objects are aggregated into a single JSON object representing all tags.

### [Warnings and Errors]

The Cross-Compiler 204 generates warning messages, of three categories. A first category is errors in the SWF file (e.g., incorrect bitmap data, unexpected properties, incorrect tag according to the spec). A second category is warnings about features in the SWF file that are not supported. A third category is warnings about features that are supported, but may not work on all platforms.

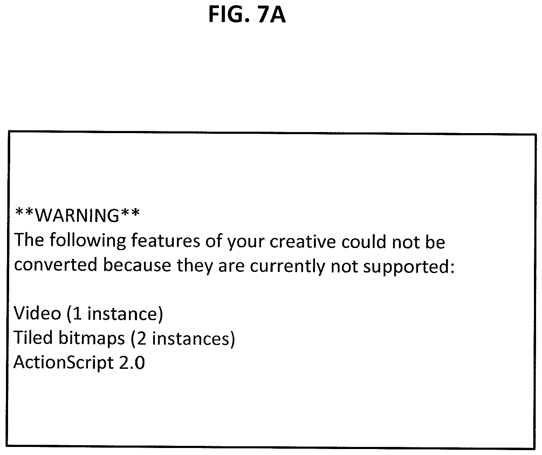

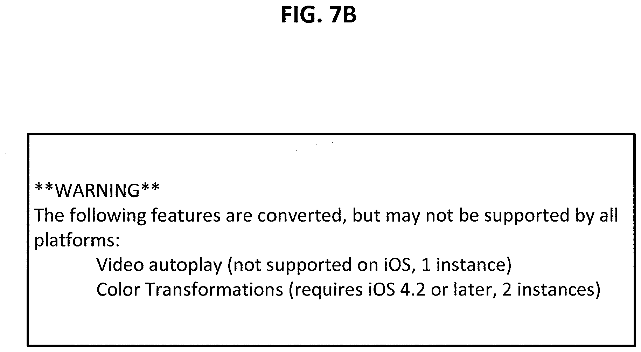

FIGS. 7A and 7B are examples of warning messages.

### INTERMEDIATE-CODE OBJECT

The Intermediate-Code Object that is generated by the Cross-Compiler 204 is a serialized form of an intermediate representation. The Intermediate-Code Object can be a JSON object. A JSON object is a collection of key:value pairs, comma-separated and enclosed in curly braces. A JSON object can include arrays. An array is represented as an ordered sequence of values, comma-separated and enclosed in square brackets.

The resulting Intermediate-Code Object may be transmitted to a portable device for processing by the Intermediate-Code runtime. An example of an Intermediate-Code Object generated based on JSON is provided in an example operation, described below.

### INTERMEDIATE-CODE RUNTIME

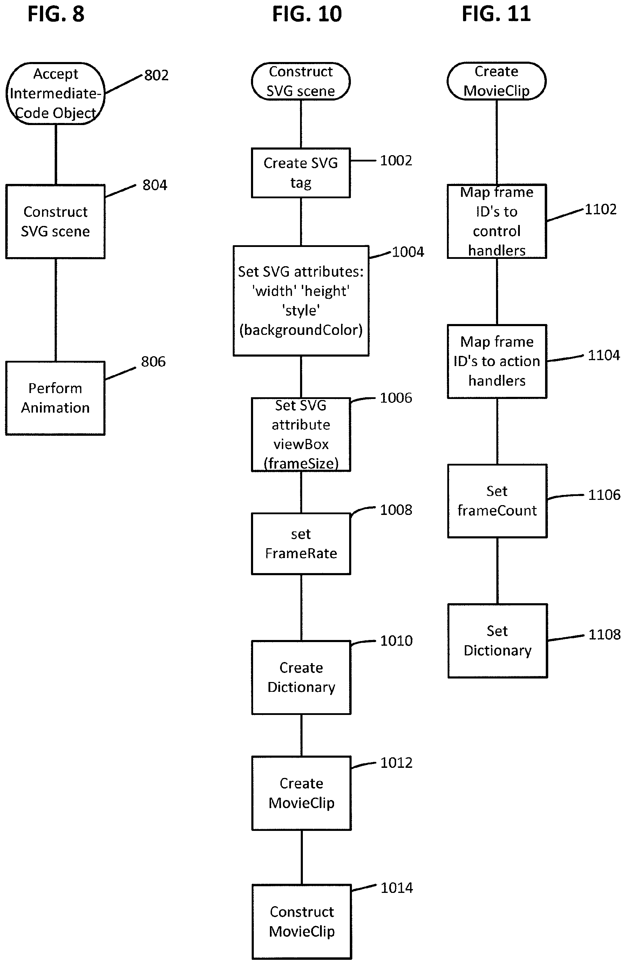

The Intermediate-Code Runtime 210 can be a JavaScript® program that is included in an HTML document. In examples described below, an object-oriented version of JavaScript is used. Based on an object-oriented convention, the Stage and MovieClip are objects that are created, in an instantiation process, and constructed, to execute methods. The Intermediate-Code Runtime 210 may additionally incorporates the Google Closure Library (a publicly available open source JavaScript® library). The Intermediate-Code Runtime 210 dynamically adds, removes and modifies SVG nodes in a Document Object Model (DOM) for an HTML document to perform an animation using a Web browser. As can be seen in FIG. 8, the Intermediate-Code Runtime is initialized using an API that takes as input an Intermediate-Code object, step 802. At step 804, the Intermediate-Code Runtime uses the data from the Intermediate-Code Object to construct an SVG scene and perform animation, step 806.

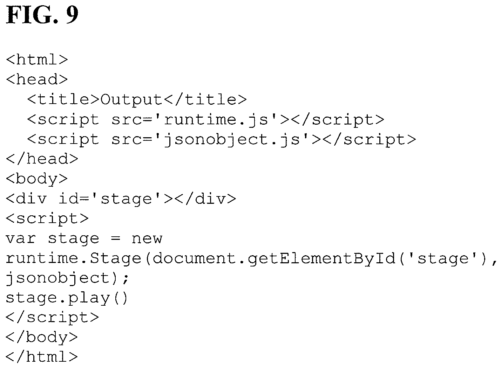

In an example, a developer inserts the script and associated JSON object into an HTML document, for example, as shown in FIG. 9. As can be seen in FIG. 9, the script creates a new Stage object, which takes as an input parameter the JSON object, and performs the function "play" for a Stage object.

FIG. 10 shows the process of constructing a SVG scene in more detail. In the example, this process is performed upon creation of a Stage object. At step 1002, the Stage object takes as input the Intermediate-Code Object and creates an SVG DOM element. The SVG DOM element is an <svg> tag element, which can include attributes, width, height, style, and viewBox. In step 1004, the Intermediate-Code Runtime sets the <svg> tag attributes. The Stage object obtains backgroundColor from the Intermediate-Code Object and applies the backgroundColor as a value for the style attribute. In step 1006, the Stage object obtains frameSize from the Intermediate-Code Object and applies the frameSize as a value of the viewBox.

The Intermediate-Code Runtime 210 generates a DOM that maintains the SVG structure.

The Stage object incorporates a clock and a dictionary to perform an animation using a MovieClip. At step 1008, the clock is set to a value of frameRate, which is obtained from the Intermediate-Code Object. At step 1010, the Stage object initializes a dictionary.

The dictionary keeps track of display object instances by their character ID. A dictionary can be in the form of a data structure having a tag id field and a tag handler field. When a main MovieClip is created, the main MovieClip places all display object definitions that it encounters in the dictionary. New nested MovieClips can be created by a control tag handler, described below as a DefineSprite display object. A nested movieClip is a MovieClip within the main MovieClip. Consistent with the SWF specification, nested MovieClips are created within the main MovieClip (those created based on an Intermediate-code DefineSprite tag) and without containing other definition tags.

At step 1012, the Stage object creates the structure of a MovieClip that represents the main timeline, where a timeline consists of one or more frames. As can be seen in FIG. 11, creation of a MovieClip involves a step 1102 of mapping frame ID's to control handlers, a step 1104 of mapping frame ID's to action handlers, a step 1106 of setting the frameCount, and a step 1108 of setting a dictionary.

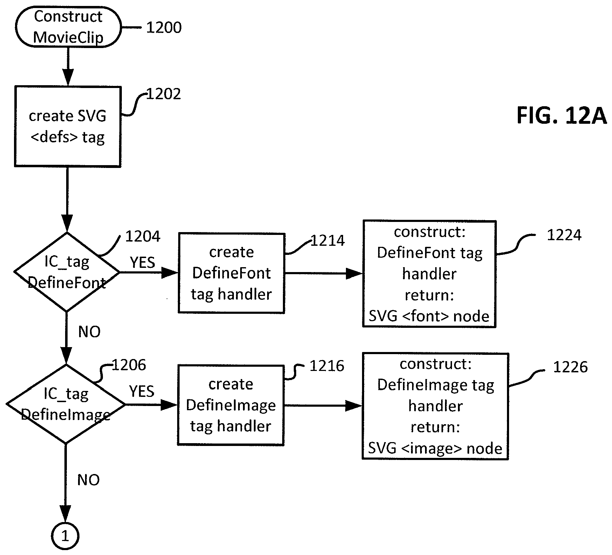

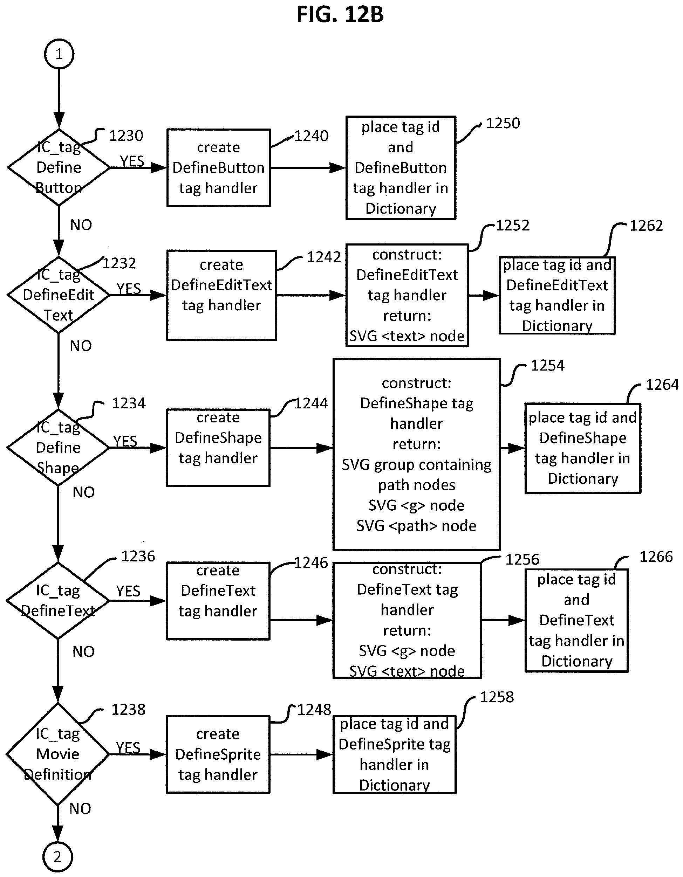

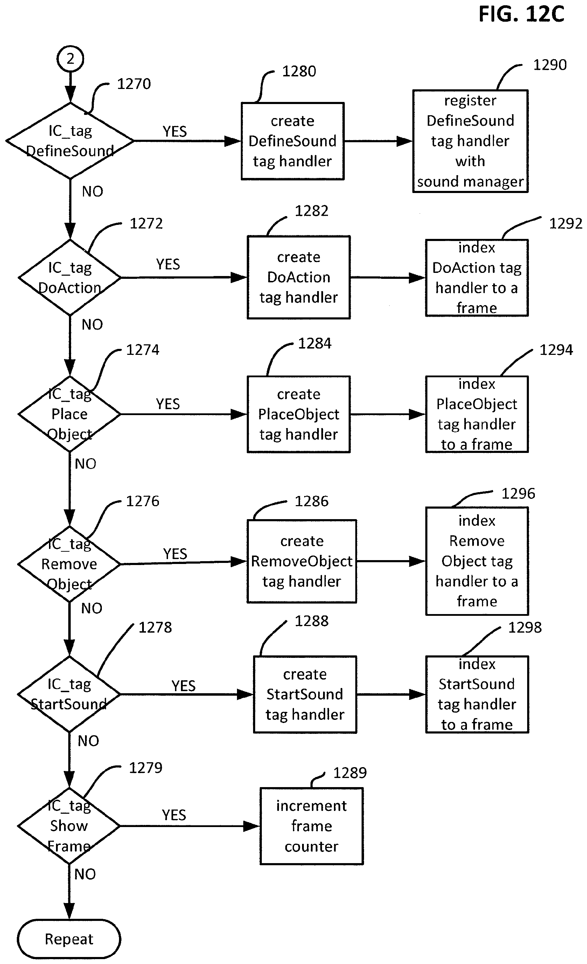

In the case that an Intermediate-Code Object is formed as a JSON object, at step 1014, a MovieClip is constructed based on JSON tags contained in the JSON object. The MovieClip is set as an SVG <defs> tag. FIGs. 12A, 12B and 12C is a flowchart for constructing a MovieClip. After the top level <defs> tag is formed in step 1202, JSON tags are analyzed to determine the type of tag, and provided the tag type, an action is performed by the JavaScript runtime. The JSON tags are categorized as definition tags, control tags, and action tags. Definition tags define content, and each defined content is assigned a character ID. The Intermediate-Code Runtime stores the defined content and associated character ID in the dictionary for the MovieClip. Control tags can reference definitions in the dictionary by character ID and perform some action on the defined character. Action tags, as will be discussed later in an example, can contain ActionScript bytecode.

The Intermediate-Code Runtime 210 maintains a display list for display objects obtained from the dictionary and displays display objects from the display list using SVG by dynamically creating and modifying SVG nodes in the DOM. While playing a MovieClip timeline, the display list is updated for each new frame. The display list manages the stacking order of display objects and is responsible for enforcement of clipping layers. A display object corresponds to an element on the display list. A display object is an instance of a character definition, placed at a certain depth. The display object contains code for creating a SVG <use> tag at the correct position in the DOM tree. A clipping depth may be set for a display object, where the object itself will not be displayed. Instead the outline of the object is used to clip other objects on the display list. In order to make clipping layers work in SVG, all effected display objects are modified by setting a clip-depth property of their <use> tag. Because SVG only allows one clip-depth property per tag, the <use> tag is wrapped in a group with the clip-path property. In particular, the <use> tag may be nested inside several SVG <g> tags if it is affected by several clipping layers.

The Intermediate-code Runtime includes an interface class definition, referred to as a DisplayObjectBuilder. DisplayObjectBuilder represents an interface for builders that are able to build instances of a display object from a definition. In the case of a sprite, each time a sprite is placed on a display list, a new MovieClip instance is constructed using the DisplayObj ectBuilder.

FIGs. 12A, 12B, and 12C show a series of decision steps, in which the Intermediate-code Object is checked for tags (IC_tags), which in the example are JSON tags. JSON tags that are analyzed in creation of a MovieClip include IC_tag DefineFont 1204, IC_tag DefineImage 1206, IC_tag DefineButton 1230, IC_tag DefineEditText 1232, IC_tag DefineShape 1234, IC_tag DefineText 1236, IC_tag MovieDefinition 1238, IC_tag DefineSound 1270, IC_tag DoAction 1272, IC_tag PlaceObject 1274, IC_tag RemoveObject 1276, and IC_tag StartSound 1278, and IC_tag ShowFrame 1279. The IC_tags DefineButton, DefineEditText, DefineFont, and DefineText, are definition tags. Control tags include the IC_tag StartSound tag, the IC_tag PlaceObject tag, and the IC_tag RemoveObject tag.

Each respective definition tag and control tag has an associated operation, referred to as an Intermediate-Code tagHandler. Operations performed by the Intermediate-Code Runtime 210 for definition and control tags include, adding an SVG node, or modifying the SVG node in the case of control tags. Control tags are coupled to a particular frame, and are executed each time a frame is displayed. Action tags include the IC_tag doAction tag. Action tags are also coupled to a particular frame, and executed each time that frame is displayed.

Definition and control tags create SVG tags for incorporation into a DOM tree. SVG tags in the DOM tree are handled by the Web browser along with other HTML tags.

In the case of IC_tag DefineFont 1204, a DefineFont tag handler is created at step 1214. Upon construction of a DefineFont tag handler, an SVG <font> node or <font-face> node is created, which can contain glyph definitions of the font. The SVG <font> or <font-face> node is appended to the DOM. The SVG <font-face> node can include an attribute font-family. As such, the created font can be later used by referring to this font-family. The SVG <font-face> node can also include attributes ascent and descent. The SVG <font> node can include an attribute "horiz-adv-x" that is set with a value of EM square size. An SVG <glyph> node can set an attribute d having a value of glyph data, and an attribute unicode.

In the case of IC_tag DefineImage 1206, a Definelmage tag handler is created at step 1216. Upon construction of a DefineImage tag handler, an SVG <image> node is created, which can have attributes width, height, and a hyperlink. The SVG <image> node is appended to the DOM.

In the case of detection of a IC_tag DefineButton 1230, in step 1240 the Intermediate-Code Runtime will create a DefineButton tag handler, and at step 1250, will place the tag id and DefineButton tag handler in the dictionary.

In the case of detection of IC_tag DefineEditText 1232, the Intermediate-Code Runtime will create a DefineEditText tag handler at step 1242, and will construct the DefineEditText tag handler at step 1252, which produces a SVG <text> node. The SVG <text> node is appended to the DOM. In addition, a tag id and the DefineEditText tag handler are placed in the dictionary at step 1262. Attributes that can be set for the <text> node, include font-family, font-size, x, y, fill-rule, fill, fill-opacity, and text-anchor. Since SVG collapses white space while SWF preserves it, an attribute "style" is set to a value of preserve white space.

In the case of detection of IC_tag DefineShape 1234, the Intermediate-Code Runtime performs a step 1244 of creating a DefineShape tag handler, and a step 1254 of constructing a DefineShape tag handler. Constructing a DefineShape tag handler produces an SVG group containing path nodes that correspond to the shape, and creates all fillstyle definitions needed to draw the shape. An SVG group is formed as an SVG <g> tag and a set of SVG <path> nodes. The SVG group is appended to the DOM. In addition, in step 1264, a tag id and the DefineShape tag handler are placed in the dictionary.

The operation performed upon detecting a IC_tag DefineText tag 1236 involves a step 1246 of creating a DefineText tag handler, and constructing the DefineText tag handler at step 1256. In constructing the DefineText tag handler, an SVG <g> node and a set of <text> nodes are created. The SVG <g> node for a text group can include an attribute of transform having a value of a transform matrix. As mentioned above, the SVG <text> node can have attributes including font-family, font-size, x, y, fill-rule, fill, and fill-opacity. In addition, in step 1266, a tag id and the DefineText tag handler are placed in the dictionary.

In the case that a IC_tag MovieDefinition tag is detected 1238, the operation of creating a DefineSprite tag handler is performed at step 1248, and at step 1258, a tag id and the DefineSprite tag handler are placed in the dictionary.

The operation associated with detection of a IC_tag DefineSound tag 1270 involves a step 1280 of creating a DefineSound tag handler and a step 1290 of registering the DefineSound tag handler with a sound manager.

In the case that a IC_tag DoAction tag is detected 1272, at step 1282 a DoAction tag handler is created, and at step 1292 the DoAction tag handler is added as an action handler for a frame.

The PlaceObject tag handler and the RemoveObject tag handler are responsible for placing and removing display objects on the display list for a frame. Upon detection of a IC_tag PlaceObject tag 1274, a PlaceObject tag handler is created at step 1284 and at step 1294, the PlaceObject tag handler is added as a control tag handler for a frame. Upon detection of a IC_tag RemoveObject tag 1276, a RemoveObject tag handler is created at step 1286 and at step 1296, the RemoveObject tag handler is added as a control tag handler for a frame.

Upon detecting a IC_tag StartSound tag 1278, at step 1288, a StartSound tag handler is created, and at step 1298, the StartSound tag handler is added as a control tag handler for a frame.

A IC_tag ShowFrame tag marks the end of a frame. Upon detecting a IC_tag ShowFrame tag 1279, a frame counter is incremented.

The decision steps in FIGs. 12A, 12B and 12C are repeated until all tags have been detected in the JSON object.

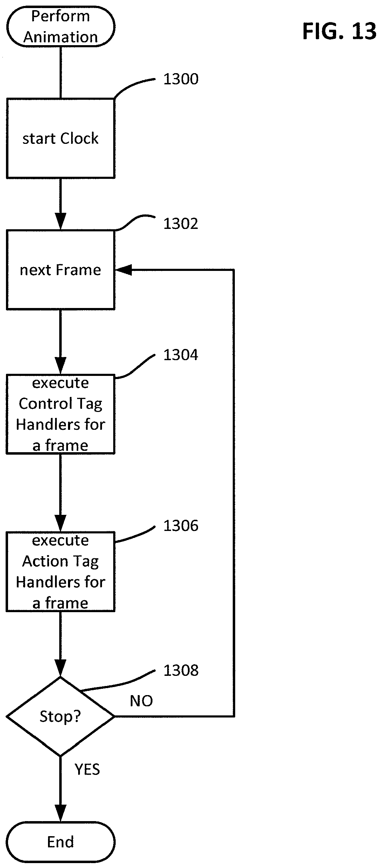

As shown in FIG. 8, after step 804 of constructing an SVG scene, an animation is performed at step 806. In FIGs. 12A, 12B, 12C, the construction of MovieClip object results in definition tag handlers placed in the dictionary for the MovieClip object, an initial DOM having an arrangement of SVG nodes, control tag handlers defined for associated frames, and action handlers defined for associated frames. Animation is performed by the Intermediate-Code Runtime by starting a clock and performing a play method for the MovieObject. FIGs. 13, 14, and 15 illustrate steps involved in an example for producing the animation from the play list.

An animation involves dynamically adding and modifying SVG nodes on the DOM. Steps that relate to dynamically adding and modifying SVG nodes are shown in the flowchart of FIG. 13. To begin animation, a clock is started at step 1300. The clock will begin by calling a tick method of each registered MovieClip, and will continue calling this method at the set framerate. Next, a play method is called for a respective MovieClip. The play method enables a MovieClip to proceed to the next frame at step 1302 in accordance with the clock. At each frame, a set of control tag handlers that are indexed for the respective frame are executed at step 1304. Also, at each frame, a set of action handlers that are indexed for the respective frame are executed at step 1308. Cycling through frames in a MovieClip continues until a stop method is called to the MovieClip at step 1308.

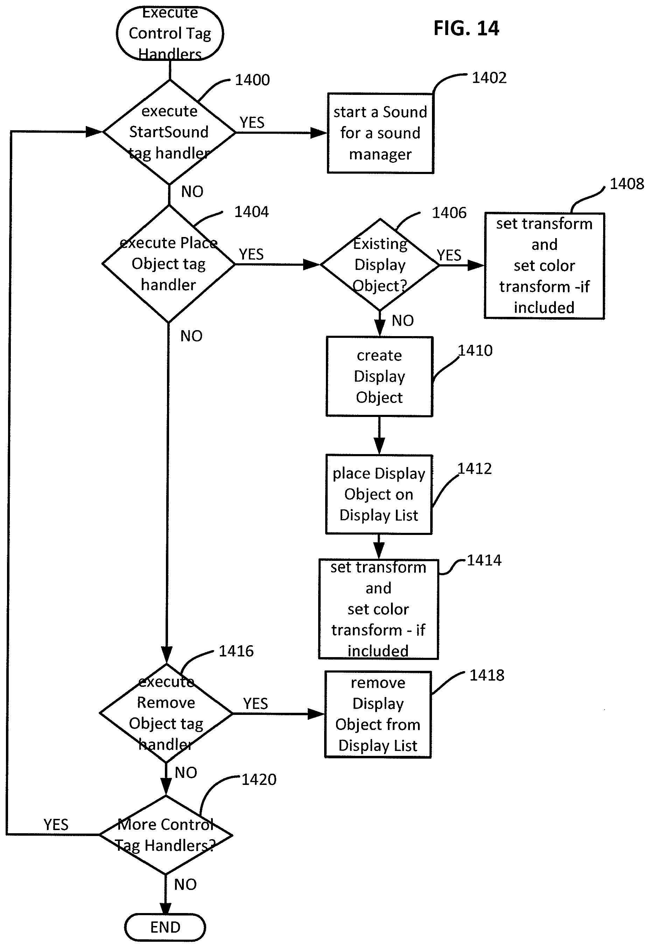

FIG. 14 shows steps involved in execution of control tag handlers in more detail. A set of control tag handlers that can be associated with a frame include a StartSound tag handler, a PlaceObject tag handler, and a RemoveObject tag handler. When a StartSound tag handler is executed 1400, a sound is started by sound manager at step 1402. Execution of a PlaceObject tag handler 1404 places display objects on a display list, which leads to a modification of the scene being displayed at a frame. At step 1406 if the display object exists on the display list, the display object is modified at step 1408 through a set transform method, and optionally through a set color transform, for an existing color transform matrix. At step 1406 if the display object does not exist on the display list, a new display object is created at step 1410 and set to a clip depth. The new display object is placed on the display list and added to the DOM, at step 1412, and a transform matrix for the display object is set at step 1414. If the display object has a color transform matrix, the color transform matrix will be set. In each case, the setting of a transform matrix and color transform matrix will cause a display object to be displayed or modified in a currently displayed frame. A displayed object will be removed from the display list at step 1418 when a RemoveObject tag handler is executed 1416. Other control tag handlers in a set of control tag handlers will be executed 1420.

In the case of creating a button display object, at the step of creating a display object 1410, a button is formed as a group of states, indicated by an SVG <g> tag. Each button that is formed has three states: up (normal), over and down. Each Button state is formed as a display list of different predefined characters. Thus, the buttons are created as ordinary shape definitions provided by the Cross-Compiler. Buttons also have a hit state to which all event handlers are attached. Event handlers for buttons are handled by the Intermediate-Code Runtime. Event handlers include 'mouseover,' 'mouseup,' 'mousedown,' and 'mouseout.'

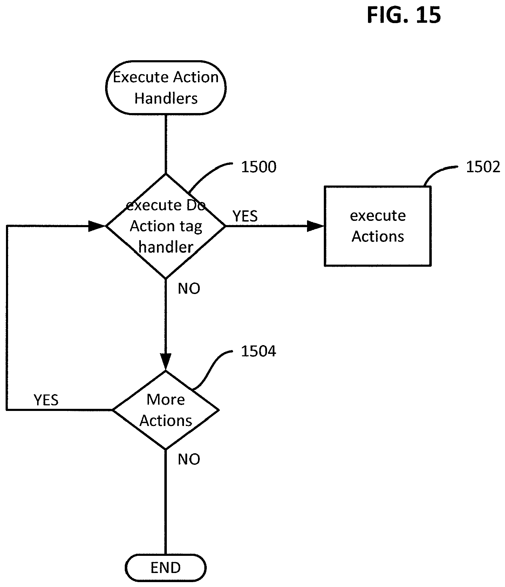

FIG. 15 shows steps involved in execution of action handlers. When an action handler is encountered 1500, the actions associated with the handler will be executed at step 1502. The steps are repeated for each registered action handler at step 1504.

Interactive movies can be implemented using ActionScript®, which like JavaScript® has become an object-oriented programming language, but with an added use for development of Adobe Flash applications. Interactivity and complex tasks like loading other SWF files can be performed using ActionScript®.

Adobe provides a compiler that compiles ActionScript® source-code into ActionScript® bytecode. If ActioScript® is developed for controlling an animation, the ActionScript® bytecode will be included in the SWF file, for example, in the form of DoAction tags and DefineButton tags. The Adobe® Flash® Player provides a capability to interpret the ActionScript® bytecode.

The Cross-Compiler 204 transfers ActionScript® bytecode to the Intermediate-Code Object. The transfer is accomplished by converting a SWF DoAction tag into an Intermediate-object DoAction tag that contains the ActionScript® bytecode. A similar transfer is performed for ActionScript® bytecode included in buttons. Subsequently, the Cross-Compiler 204 transfers over the ActionScript® bytecode. The Intermediate-Code Runtime operates as an interpreter for the ActionScript® bytecode contained in the Intermediate-Code Object.

### EXAMPLE OPERATION 1

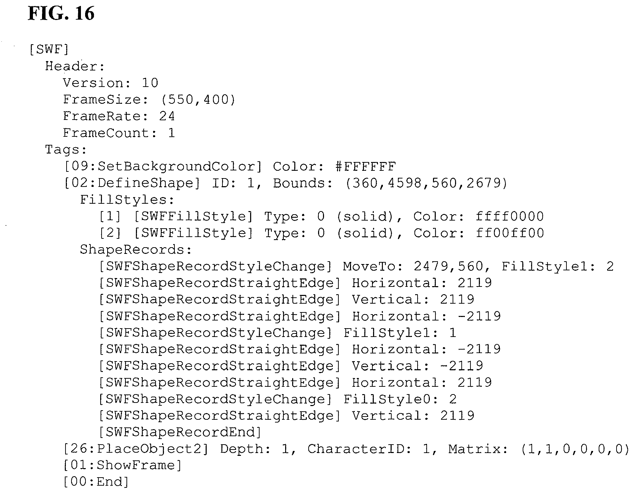

Inputs and outputs for an example operation are shown in FIGS. 16-19. The SWF file in FIG. 16 will draw two adjacent rectangles in one DefineShape tag: a red one and a green one. This definition is placed on the stage by a PlaceObject tag, and the frame is displayed by the ShowFrame tag. The SWF file ends with a 'End' tag. FIG. 16 shows the SWF file represented as text. The text representation of a SWF binary format is obtained, using the parser in Cross-Compiler 204. As can be seen in FIG. 16, a SWF file consists of a header and a set of tagged data blocks. The SWF header describes the file version, length of the file, frame size, frame rate, and frame count. The example shown in FIG. 16 shows a header with a Version, FrameSize, FrameRate, and FrameCount. In the tagged data blocks, each tag is identified with a tag type. In the example shown in FIG. 16, the tag types are [09:SetBackgroundColor], [02:DefineShape], [26: PlaceObject], [01:ShowFrame], and [00:End]. The DefineShape tag includes an array of FillStyles and an array of ShapeRecords.

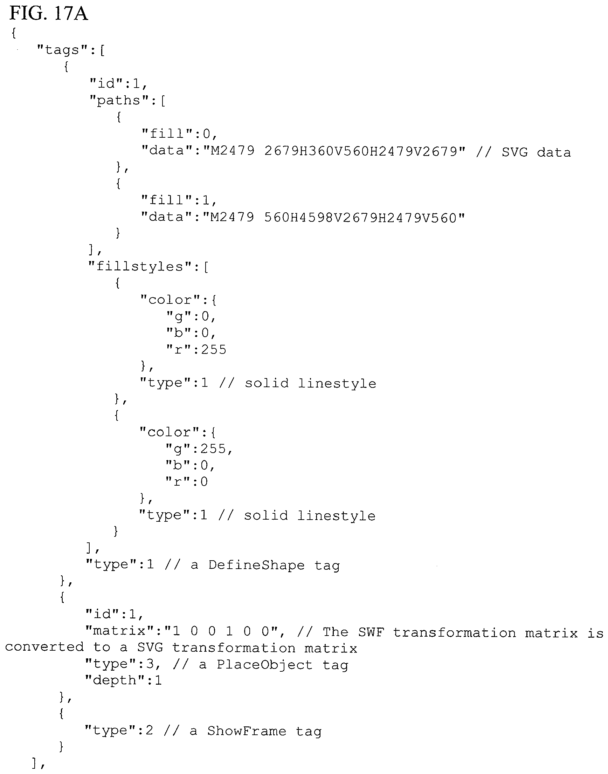

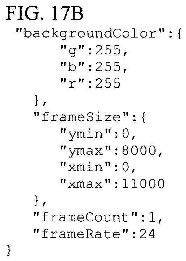

FIGs. 17A and 17B show an example JSON object as the intermediate representation produced using the Cross-Compiler.

The Cross-Compiler parses the SWF abstract syntax tree (AST) of FIG. 16 and converts it to the intermediate representation. The outline of the AST is similar, but is different from the original SWF AST in a number of ways:

Whereas the vector graphics (contained in the DefineShape tag) in the original SWF file are defined in a SWF-specific format, the Cross-Compiler converts this to an intermediate representation of SVG vector graphics. For example, SWF allows two fillstyles for each edge: one for the left hand and one for the right hand side of the edge. SVG doesn't support that behavior, so the Cross-Compiler automatically splits the path into two pieces: one that draws the red rectangle and one that draws the green rectangle. Furthermore, the Cross-Compiler generates the path definition as an intermediate representation of the SVG vector data (the string starting with "M2479").

As mentioned above, the JSON AST is simpler than the SWF AST: there exist a smaller number of different tags. In the SWF specification, several variants of a specific tag may exist (for example DefineShape, DefineShape2, DefineShape3 and DefineShape4). The Cross-Compiler maps them all onto an Intermediate-Code DefineShape, making the Intermediate-Code Runtime simpler. The same applies to other SWF tags having multiple versions.

Not shown in FIG. 17A, 17B: the Cross-Compiler converts several other SWF-specific features to a web-ready format. For example, image, audio, video and font definitions are all converted to a format that is easy to use in a browser.

As mentioned above, a JSON object is made up of key:value pairs enclosed in curly braces and arrays enclosed in square brackets. The JSON object shown in FIG. 17A, 17B consists of a JSON DefineShape tag, having an array of elements within the first square brackets. The "paths" and "fillstyles" are represented as arrays within the DefineShape tag. After the DefineShape tag is a SWF transformation matrix that has been converted to a SVG transformation matrix. Below the transformation matrix is a JSON PlaceObject tag, then a ShowFrame tag. "backgroundColor," "frameSize," "frameCount," and "frameRate" obtained from the SWF header are provided as key:value pairs.

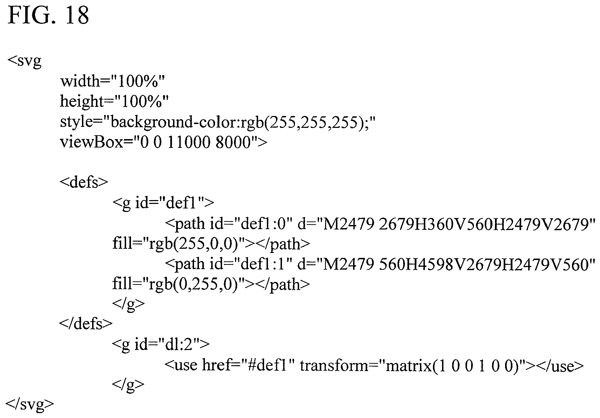

FIG. 18 shows an example of the SVG code that may be generated by the Intermediate-Code Runtime using the JSON object of FIG. 17A, 17B. The Intermediate-Code Runtime uses the display operations provided by the Web browser to render the SVG tags and HTML5, and performs actions, such as updating the SVG for each frame, to play a MovieClip.

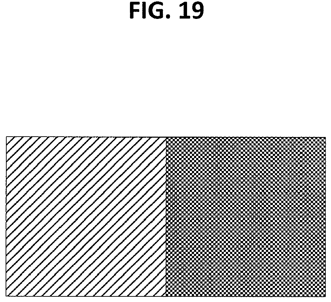

The example output of the MovieClip as generated by the Intermediate-Code Runtime is shown in FIG. 19. For purposes of illustration, the red rectangle is shown using a diagonal hash mark pattern, and the green rectangle is shown using a crosshatch pattern.

### EXAMPLE OPERATION 2

Another example operation involves several SWF files interacting together. A feature of the Adobe® Flash® Player is the capability of animations to call other child animations. The example operation illustrates use of the Intermediate-Code Runtime to provide this feature.

A developer using the Adobe Flash IDE can create a source-level ActionScript, which includes a call "loadMovie." The Adobe Flash IDE compiles the ActionScript resulting in a SWF DoAction tag that contains ActionScript bytecode. The ActionScript bytecode will contain a ActionGetURL2 instruction (the equivalent of the loadMovie function in ActionScript). Adobe® Flash® player is capable of executing the SWF file and interpreting the ActionScript bytecode. Upon encountering the ActionGetURL instruction, the player will fetch a child SWF file.

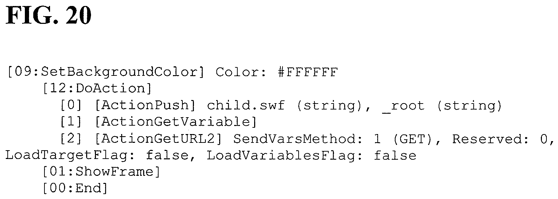

In the example operation 2, each animation is compiled using the Adobe Flash IDE into respective SWF files. The parent animation includes the ActionScript 2.0 function of loadMovie. FIG. 20 shows an example parent SWF file having the ActionScript 2.0 loadMovie function: loadMovie("child.swf", _root). The parent Flash file having an ActionScript 2.0 "loadMovie" function is compiled to produce ActionScript bytecode including the ActionGetURL2 instruction. Any child animations are compiled into respective SWF files.

The Cross-Compiler 204 compiles the parent SWF file. An HTML page incorporates the parent SWF file as a Stage object, as described above. In addition, any child SWF files are cross-compiled. Then, during execution of the parent movie timeline, such as during display of a frame or during handling of a button event, the parent movie may encounter a ActionGetURL2 ActionScript instruction. The ActionGetURL2 instruction is in the form of ActionScrip bytecode that is included in a doAction JSON tag. When the ActionGetURL2 function is encountered, the Intermediate-Code Runtime will load a cross-compiled child SWF file using an XmlHttpRequest, in the form of a JSON object. The JSON object is placed at the location specified in the ActionGetURL2 function. After receiving the JSON object that represents the child movie, the object is interpreted as a MovieClip and gets rendered as a nested MovieClip within the parent timeline.

## Claims

1. A system (300) having a server computer (302, 500) and at least one type of client computer (304, 400, 108, 110, 112, 114) in communication with the server computer,
the server computer (302) executing a cross-compiler (308, 520), the server computer storing a formatted multimedia object in a format that is a binary representation of vector graphics and animation;
the at least one type of client computer (304, 400) having an associated display portion (408) and being capable of executing at least one target web browser (312, 430), the at least one target web browser being capable of performing a runtime script (314, 428);
the cross-compiler (308, 520) parses the formatted multimedia object (606), generates tagged data block objects (610), and performs recoding on multimedia data contained in the multimedia object (612) to generate an intermediate object (618) for the at least one target web browser (312, 430), the intermediate object being a collection of key-value pairs,
wherein the runtime-script (314, 428) uses the intermediate object (802) to dynamically add, remove, and modify scalable vector graphic nodes (804) in a Document Object Model, DOM, for an HTML document to perform an animation (806) using the at least one target web browser (312, 430) and to render the animation on a display of the at least one type of client computer;
wherein the generation of the intermediate object includes converting at least a first tag and a second tag in the formatted multimedia object into a single tag in the intermediate object, the first tag being associated with a first variant of a vector graphics operation and the second tag being associated with a second variant of the vector graphics operation; and
wherein each tag is represented in the intermediate object as a collection of key-value pairs.

2. A portable display device (304, 400, 108, 110, 112, 114), comprising;
a storage medium (424) for storing a runtime script (314, 428), an intermediate data structure (310), and a browser (312, 430), being capable of performing a runtime script, the intermediate data structure being generated for the browser via cross-compilation by a server according to claim 1 being in communication with the portable display device based on a formatted multimedia object (306) stored on the server,
wherein the formatted multimedia object is in a format that is a binary representation of vector graphics and animation, and wherein the intermediate data structure is a collection of key-value pairs, and
wherein the cross-compilation by the server includes parsing the formatted multimedia object, generating tagged data block objects, and performing recoding on multimedia data contained in the multimedia object and further includes converting at least a first tag and a second tag in the formatted multimedia object into a single tag in the intermediate object, the first tag being associated with a first variant of a vector graphics operation and the second tag being associated with a second variant of the vector graphics operation, and wherein each tag is represented in the intermediate object as a collection of key-value pairs;
a display (408); and
a processor (406) for obtaining the intermediate data structure (802) for using the runtime script to dynamically add, remove, and modify scalable vector graphic nodes (804) in a Document Object Model, DOM, for an HTML document to perform an animation (806) using the browser (312, 430) and for rendering the animation on the display of the portable display device (806).

3. The portable display device of claim 2, wherein said processor (406) performs the runtime script (428) to generate and modify graphic codes (804) by creating a structured tag (1002), setting attribute-value pairs for the tag (1004), setting a framerate (1006), creating a dictionary structure (1010), and creating a movie clip (1012).

4. The portable display device of claim 3, wherein said movie clip has a plurality of frames constituting a timeline and is rendered on the display as an animation (1302, 1304, 1306, 1308).

5. The .portable display device of claim 4, wherein said processor (400) processes the runtime script (428) to perform the animation by creating a graphics definition code for each data definition tag and control code tag encountered in the intermediate data structure (1214, 1216, 1240, 1242, 1244, 1246, 1248, 1280, 1282), placing at least one display object on a display list based on the control code tag (1412), said placing the at least one display object on the display list includes creating a display object for display based on scalable vector graphic codes (1410) or modifying a scalable vector code for a display object (1408) in order to play frames of the movie clip.

6. The portable display device of claim 5, wherein the processor (406) performs the runtime script to update graphics definition codes for each next frame in the movie clip (1304).

7. The portable display device of claim 2, wherein the storage medium (424) stores a parent intermediate data structure for a parent multimedia object and a plurality of child intermediate data structures for a plurality of child multimedia objects, the processor (406) dynamically loads the child intermediate data structures into the parent intermediate data structure to create a composite movie clip.

8. The portable display device of claim 2, wherein the storage medium (424) stores at least one of image, video, and audio that have been recoded into formats that can be processed by a target browser.

9. The portable display device of claim 8, wherein the processor (406) selects the image, video, and audio based on the recoded format.

10. The system of claim 1, wherein the system (300) comprises a plurality of types of client computers (108, 110, 112, 114), the plurality of types of client computers (108, 110, 112, 114) being capable of executing a different respective target web browser (312, 430), wherein the cross compiler (308) generates an intermediate object (310) for each of the target web browsers.

11. The system of claim 1, wherein the client computer (304) comprises a plurality of target web browsers (312), the cross compiler (308) generates an intermediate object (310) for each of the target web browsers.

12. The system of claim 1 wherein the cross compiler (308) generates warning messages for portions of the formatted multimedia object that cannot be generated as tagged data block objects.

13. A method of displaying multimedia content for hierarchical structured documents, comprising:
by a server, parsing (608) a binary multimedia object stored on the server, generating tagged data block objects, and performing recoding on multimedia data contained in the multimedia object to generate an intermediate object for at least one target web browser of a client computer having a display portion and being in communication with the server, said browser being capable of performing a runtime script, wherein the binary multimedia object is in a format that is a binary representation of vector graphics and animation;
wherein the intermediate data structure is a collection of key-value pairs; and
wherein the generation of the intermediate object includes converting at least a first tag and a second tag in the formatted multimedia object into a single tag in the intermediate object, the first tag being associated with a first variant of a vector graphics operation and the second tag being associated with a second variant of the vector graphics operation; and
wherein each tag is represented in the intermediate object as a collection of key-value pairs;
by the client computer, obtaining the intermediate object and executing a browser to perform a runtime script for using the intermediate object to dynamically add, remove, and modify scalable vector graphic nodes in an Document Object Model, DOM, for an HTML document to perform an animation using the web browser; and
rendering the animation on the display of the client computer.

14. The method of claim 13, wherein the binary multimedia object includes instructions for incorporating child multimedia objects.

15. The method of claim 13, wherein the step of modifying the display objects includes creating a new display object (1410) in the case that a display object does not exist (1406).

## Patentansprüche

1. System (300), das einen Server-Computer (302, 500) und mindestens einem Typ von Client-Computer (304, 400, 108, 110, 112, 114) in Verbindung mit dem Server-Computer hat, wobei der Server-Computer (302) einen Cross-Compiler (308, 520) ausführt, wobei der Server-Computer ein formatiertes Multimedia-Objekt in einem Format speichert, das eine binäre Darstellung von Vektorgrafiken und Animation ist;
wobei der mindestens eine Typ von Client-Computer (304, 400) einen zugehörigen Anzeigeabschnitt (408) aufweist und in der Lage ist, mindestens einen Ziel-Webbrowser (312, 430) auszuführen, wobei der mindestens eine Ziel-Webbrowser in der Lage ist, ein Laufzeit-Skript (314, 428) auszuführen;
wobei der Cross-Compiler (308, 520) das formatierte Multimedia-Objekt (606) parst, getaggte Datenblockobjekte (610) erzeugt und eine Umkodierung der in dem Multimedia-Objekt (612) enthaltenen Multimedia-Daten durchführt, um ein Zwischenobjekt (618) für den mindestens einen Ziel-Webbrowser (312, 430) zu erzeugen, wobei das Zwischenobjekt eine Sammlung von Schlüssel-Wert-Paaren ist,
wobei das Laufzeit-Skript (314, 428) das Zwischenobjekt (802) verwendet, um dynamisch skalierbare Vektorgrafikknoten (804) in einem Dokumentenobjektmodell, DOM, hinzuzufügen, zu entfernen und zu modifizieren, damit ein HTML-Dokument eine Animation (806) unter Verwendung des mindestens einen Ziel-Webbrowsers (312, 430) ausführt und die Animation auf einer Anzeige des mindestens einen Typ eines Client-Computers rendert;
wobei das Erzeugen des Zwischenobjekts das Umwandeln mindestens eines ersten Tags und eines zweiten Tags in dem formatierten Multimedia-Objekt in ein einzelnes Tag in dem Zwischenobjekt beinhaltet, wobei das erste Tag mit einer ersten Variante einer Vektorgrafikoperation assoziiert ist und das zweite Tag mit einer zweiten Variante der Vektorgrafikoperation assoziiert ist; und
wobei jedes Tag in dem Zwischenobjekt als eine Sammlung von Schlüssel-Wert-Paaren dargestellt wird.

2. Tragbare Anzeigevorrichtung (304, 400, 108, 110, 112, 114), umfassend:
ein Speichermedium (424) zum Speichern eines Laufzeitskripts (314, 428), einer Zwischendatenstruktur (310) und eines Browsers (312, 430), der in der Lage ist, ein Laufzeitskript auszuführen, wobei die Zwischendatenstruktur für den Browser durch Cross-Compilation durch einen Server gemäß Anspruch 1 erzeugt wird, der mit der tragbaren Anzeigevorrichtung in Verbindung steht, basierend auf einem auf dem Server gespeicherten formatierten Multimedia-Objekt (306),
wobei das formatierte Multimedia-Objekt in einem Format ist, das eine binäre Darstellung von Vektorgrafiken und Animationen ist, und wobei die Zwischendatenstruktur eine Sammlung von Schlüssel-Wert-Paaren ist, und
wobei die Cross-Compilation durch den Server, Parsen des formatierten Multimedia-Objekts, Erzeugen von getaggten Datenblockobjekten und Durchführen von Umkodierung von in dem Multimedia-Objekt enthaltenen Multimedia-Daten beinhaltet und ferner Umwandeln mindestens eines ersten Tags und eines zweiten Tags in dem formatierten Multimedia-Objekt in ein einzelnes Tag in dem Zwischenobjekt beinhaltet, wobei das erste Tag mit einer ersten Variante einer Vektorgrafikoperation assoziiert ist und das zweite Tag mit einer zweiten Variante der Vektorgrafikoperation assoziiert ist, und wobei jedes Tag in dem Zwischenobjekt als eine Sammlung von Schlüssel-Wert-Paaren dargestellt wird;
eine Anzeige (408); und
einen Prozessor (406) zum Erhalten der Zwischendatenstruktur (802) zum Verwenden des Laufzeitskripts zum dynamischen Hinzufügen, Entfernen und Modifizieren von skalierbaren Vektorgrafikknoten (804) in einem Dokumentenobjektmodell, DOM, für ein HTML-Dokument zum Ausführen einer Animation (806) unter Verwendung des Browsers (312, 430) und zum Rendern der Animation auf der Anzeige der tragbaren Anzeigevorrichtung (806).

3. Tragbare Anzeigevorrichtung nach Anspruch 2, wobei der Prozessor (406) das Laufzeitskript (428) ausführt, um Grafikcodes (804) zu erzeugen und zu modifizieren, durch Erzeugen eines strukturierten Tags (1002), Einstellen von Attribut-Wert-Paaren für das Tag (1004), Einstellen einer Framerate (1006), Erzeugen einer Wörterbuchstruktur (1010) und Erzeugen eines Filmausschnitts (1012).

4. Tragbare Anzeigevorrichtung nach Anspruch 3, wobei der Filmausschnitt eine Mehrzahl von Frames aufweist, die eine Zeitleiste bilden, und auf der Anzeige als Animation (1302, 1304, 1306, 1308) gerendert ist.

5. Tragbare Anzeigevorrichtung nach Anspruch 4, wobei der Prozessor (400) das Laufzeitskript (428) verarbeitet, um die Animation auszuführen durch Erzeugen eines Grafikdefinitions-Codes für jedes Datendefinitions-Tags und jedes Steuercode-Tags, das in der Zwischendatenstruktur (1214, 1216, 1240, 1242, 1244, 1246, 1248, 1280, 1282) anzutreffen ist, Platzieren mindestens eines Anzeigeobjekts auf einer Anzeigeliste basierend auf dem Steuercode-Tag (1412), wobei das Platzieren des mindestens einen Anzeigeobjekts auf der Anzeigeliste, Erzeugen eines Anzeigeobjekts zur Anzeige basierend auf skalierbaren Vektorgrafikcodes (1410) oder Modifizieren eines skalierbaren Vektorcodes für ein Anzeigeobjekt (1408) beinhaltet, um Frames des Filmausschnitts abzuspielen.

6. Tragbare Anzeigevorrichtung nach Anspruch 5, wobei der Prozessor (406) das Laufzeitskript ausführt, um Grafikdefinitions-Codes für jedes nächste Frame in dem Filmausschnitt (1304) zu aktualisieren.

7. Tragbare Anzeigevorrichtung nach Anspruch 2, wobei das Speichermedium (424) eine Eltern-Zwischendatenstruktur für ein Eltern-Multimedia-Objekt und eine Mehrzahl von Kind-Zwischendatenstrukturen für eine Mehrzahl von Kind-Multimedia-Objekten speichert, wobei der Prozessor (406) die Kind-Zwischendatenstrukturen dynamisch in die Eltern-Zwischendatenstruktur lädt, um einen zusammengesetzten Filmausschnitt zu erzeugen.

8. Tragbare Anzeigevorrichtung nach Anspruch 2, wobei das Speichermedium (424) mindestens eines von Bild, Video und Audio speichert, die in Formate umkodiert wurden, die von einem Zielbrowser verarbeitet werden können.

9. Tragbare Anzeigevorrichtung nach Anspruch 8, wobei der Prozessor (406) das Bild, Video und Audio basierend auf dem umkodierten Format auswählt.

10. System nach Anspruch 1, wobei das System (300) eine Mehrzahl von Typen von Client-Computern (108, 110, 112, 114) umfasst, wobei die Mehrzahl von Typen von Client-Computern (108, 110, 112, 114) in der Lage ist, einen jeweils anderen Ziel-Webbrowser (312, 430) auszuführen, wobei der Cross-Compiler (308) ein Zwischenobjekt (310) für jeden der Ziel-Webbrowser erzeugt.

11. System nach Anspruch 1, wobei der Client-Computer (304) eine Mehrzahl von Ziel-Webbrowsern (312) umfasst, wobei der Cross-Compiler (308) ein Zwischenobjekt (310) für jeden der Ziel-Webbrowser erzeugt.

12. System nach Anspruch 1, wobei der Cross-Compiler (308) Warnmeldungen für Abschnitte des formatierten Multimedia-Objekts erzeugt, die nicht als getaggte Datenblockobjekte erzeugt werden können.

13. Verfahren zum Anzeigen von Multimedia-Inhalt für hierarchisch strukturierte Dokumente, umfassend:
durch einen Server, Parsen (608) eines auf dem Server gespeicherten binären Multimedia-Objekts, Erzeugen von getaggten Datenblockobjekten und Durchführen von Umkodierung von in dem Multimedia-Objekt enthaltenen Multimedia-Daten, um ein Zwischenobjekt für mindestens einen Ziel-Webbrowser eines Client-Computers, der einen einem Anzeigeabschnitt hat und der mit dem Server in Verbindung steht, zu erzeugen, wobei der Browser in der Lage ist, ein Laufzeitskript auszuführen, wobei das binäre Multimedia-Objekt in einem Format ist, das eine binäre Darstellung von Vektorgrafiken und Animation ist;
wobei die Zwischendatenstruktur eine Sammlung von Schlüssel-Wert-Paaren ist; und
wobei das Erzeugen des Zwischenobjekts Umwandeln mindestens eines ersten Tags und eines zweiten Tags in dem formatierten Multimedia-Objekt in ein einzelnes Tag in dem Zwischenobjekt beinhaltet, wobei das erste Tag mit einer ersten Variante einer Vektorgrafikoperation assoziiert ist und das zweite Tag mit einer zweiten Variante der Vektorgrafikoperation assoziiert ist; und
wobei jedes Tag in dem Zwischenobjekt als eine Sammlung von Schlüssel-Wert-Paaren dargestellt wird;
durch den Client-Computer, Erhalten des Zwischenobjekts und Ausführen eines Browsers zum Ausführen eines Laufzeitskripts zum Verwenden des Zwischenobjekts zum dynamischen Hinzufügen, Entfernen und Ändern skalierbarer Vektorgrafikknoten in einem Dokumentenobjektmodell, DOM, für ein HTML-Dokument zum Ausführen einer Animation unter Verwendung des Webbrowsers; und
Rendern der Animation auf der Anzeige des Client-Computers.

14. Verfahren nach Anspruch 13, wobei das binäre Multimedia-Objekt Anweisungen zum Integrieren von Kind-Multimedia-Objekten beinhaltet.

15. Verfahren nach Anspruch 13, wobei der Schritt des Modifizierens der Anzeigeobjekte Erzeugen eines neuen Anzeigeobjekts (1410) beinhaltet, falls ein Anzeigeobjekt nicht existiert (1406).

## Revendications

1. Un système (300) ayant un ordinateur serveur (302, 500) et au moins un type d'ordinateur client (304, 400, 108, 110, 112, 114) en communication avec l'ordinateur serveur,
l'ordinateur serveur (302) exécutant un compilateur croisé (308, 520), l'ordinateur serveur stockant un objet multimédia formaté dans un format qui est une représentation binaire de graphiques et d'animations vectorielles ;
ledit au moins un type d'ordinateur client (304, 400) ayant une partie d'affichage associée (408) et étant capable d'exécuter au moins un navigateur Web cible (312, 430), ledit au moins un navigateur Web cible étant apte à exécuter un script d'exécution (314, 428) ;
le compilateur croisé (308, 520) analyse l'objet multimédia formaté (606), génère des objets de bloc de données balisés (610), et effectue un recodage sur des données multimédia contenues dans l'objet multimédia (612) pour générer un objet intermédiaire (618) pour ledit au moins un navigateur Web cible (312, 430), l'objet intermédiaire étant une collection de pairs de valeurs-clés,
le script d'exécution (314, 428) utilisant l'objet intermédiaire (802) pour ajouter, supprimer et modifier dynamiquement des noeuds graphiques vectoriels extensibles (804) dans un Document Object Model, DOM, pour un document HTML afin de réaliser une animation (806) utilisant le navigateur Web cible (312, 430) et pour faire apparaître l'animation sur un affichage dudit au moins un type d'ordinateur client ;
la génération de l'objet intermédiaire incluant le fait de convertir au moins une première étiquette et une deuxième étiquette présentes dans l'objet multimédia formaté en une étiquette unique dans l'objet intermédiaire, la première étiquette étant associée à une première variante d'une opération graphique de vecteur et la deuxième étiquette étant associée à une deuxième variante de l'opération graphique de vecteur ; et
chaque balise étant représentée dans l'objet intermédiaire sous la forme d'une collection de paires de valeurs-clés.

2. Un dispositif d'affichage portable (304, 400, 108, 110, 112, 114), comprenant :
un support de stockage (424) pour stocker un script d'exécution (314, 428), une structure de données intermédiaire (310), et un navigateur (312, 430) apte à exécuter un script d'exécution, la structure de données intermédiaire étant générée pour le navigateur via une compilation croisée par un serveur selon la revendication 1, en communication avec le dispositif d'affichage portable basé sur un objet multimédia formaté (306) enregistré sur le serveur,
l'objet multimédia formaté étant dans un format qui est une représentation binaire de graphiques et d'animation de vecteur, et la structure de données intermédiaire étant une collection de paires de valeurs- clé, et
la compilation croisée opérée par le serveur comprenant le fait d'analyser l'objet multimédia formaté, le fait de générer d'objets de blocs de données balisés, et le fait d'effectuer un recodage sur des données multimédia contenues dans l'objet multimédia, et incluant en outre le fait de convertir au moins une première étiquette et une deuxième étiquette présentes dans l'objet multimédia formaté en une étiquette unique dans l'objet intermédiaire, la première étiquette étant associée à une première variante d'une opération graphique de vecteur et la deuxième étiquette étant associée à une deuxième variante de l'opération graphique de vecteur, et chaque étiquette étant représentée dans l'objet intermédiaire en tant qu'une collection de paires de valeurs-clés ;
un écran (408) ; et
un processeur (406) pour obtenir la structure de données intermédiaire (802) pour utiliser le script d'exécution pour ajouter, supprimer et modifier dynamiquement des noeuds graphiques vectoriels extensibles (804) dans un Document Object Model, DOM, pour un document HTML pour exécuter une animation (806) en utilisant le navigateur (312, 430) et pour rendre visible l'animation sur l'écran du dispositif d'affichage mobile (806).

3. Le dispositif d'affichage portable selon la revendication 2, dans lequel ledit processeur (406) exécute le script d'exécution (428) pour générer et modifier des codes graphiques (804) en créant une balise structurée (1002), en définissant des paires de valeurs d'attribut pour la balise (1004), en définissant une fréquence d'image (1006), en créant une structure dictionnaire (1010) et en créant un clip vidéo (1012).

4. Le dispositif d'affichage portable selon la revendication 3, dans lequel ledit clip vidéo a une pluralité d'images constituant une ligne de temps et est affiché sur l'écran sous forme d'animation (1302, 1304, 1306, 1308).

5. Le dispositif d'affichage portable selon la revendication 4, dans lequel ledit processeur (400) traite le script d'exécution (428) pour exécuter l'animation en créant un code de définition graphique pour chaque étiquette de définition de données et étiquette de code de commande rencontrées dans la structure de données intermédiaire (1214, 1216, 1240, 1242, 1244, 1246, 1248, 1280, 1282), en plaçant au moins un objet d'affichage sur une liste d'affichage sur la base de la balise de code de commande (1412), ledit placement dudit au moins un objet d'affichage sur la liste d'affichage incluant le fait de créer un objet d'affichage pour affichage sur la base de codes graphiques vectoriels évolutifs (1410) ou le fait de modifier un code vectoriel évolutif pour un objet d'affichage (1408) afin de lire des images du vidéo clip.

6. Le dispositif d'affichage portable selon la revendication 5, dans lequel le processeur (406) exécute le script d'exécution pour mettre à jour des codes de définition graphique pour chaque image suivante du clip vidéo (1304).

7. Le dispositif d'affichage portable selon la revendication 2, dans lequel le support de stockage (424) stocke une structure parente de données intermédiaire pour un objet multimédia parent et une pluralité de structures enfant de données intermédiaires pour une pluralité d'objets multimédia enfants, le processeur (406) chargeant dynamiquement les structures enfant de données intermédiaires dans la structure parente de données intermédiaire pour créer un clip vidéo composite.

8. Le dispositif d'affichage portable selon la revendication 2, dans lequel le support de stockage (424) mémorise au moins une image, une vidéo et un son qui ont été recodés dans des formats qui peuvent être traités par un navigateur cible.

9. Le dispositif d'affichage portable selon la revendication 8, dans lequel le processeur (406) sélectionne l'image, la vidéo et l'audio sur la base du format recodé.

10. Le système selon la revendication 1, dans lequel le système (300) comprend une pluralité de types d'ordinateurs clients (108, 110, 112, 114), la pluralité de types d'ordinateurs clients (108, 110, 112, 114) étant apte à exécuter un navigateur Web cible respectif différent (312, 430), le compilateur croisé (308) produisant un objet intermédiaire (310) pour chacun des navigateurs Web cibles.

11. Le système selon la revendication 1, dans lequel l'ordinateur client (304) comprend une pluralité de navigateurs Web cibles (312), le compilateur croisé (308) génère un objet intermédiaire (310) pour chacun des navigateurs Web cibles.

12. Le système selon la revendication 1, dans lequel le compilateur croisé (308) génère des messages d'avertissement pour des parties de l'objet multimédia formaté qui ne peuvent pas être générées comme objets de bloc de données balisés.

13. Un procédé d'affichage de contenu multimédia pour des documents structurés hiérarchiquement, comprenant :
par un serveur, le fait d'analyser (608) un objet multimédia binaire stocké sur le serveur, le fait de générer des objets de bloc de données binaires, et le fait d'effectuer un recodage sur des données multimédia contenues dans l'objet multimédia pour générer un objet intermédiaire pour au moins un navigateur Web cible d'un ordinateur client ayant une partie d'affichage et étant en communication avec le serveur, ledit navigateur étant apte à exécuter un script d'exécution, l'objet multimédia binaire étant dans un format qui est une représentation binaire des graphiques et animations de vecteur ;
la structure de données intermédiaire étant une collection de paires de valeurs-clés ; et
le fait de générer l'objet intermédiaire comprenant le fait de convertir au moins une première étiquette et une deuxième étiquette présentes dans l'objet multimédia formaté en une étiquette unique dans l'objet intermédiaire, la première étiquette étant associée à une première variante d'une opération graphique de vecteur et la deuxième étiquette étant associée à une deuxième variante de l'opération graphique de vecteur ; et
chaque balise étant représentée dans l'objet intermédiaire sous la forme d'une collection de paires clé-valeur ;
par l'ordinateur client, le fait d'obtenir l'objet intermédiaire et d'exécuter un navigateur pour exécuter un script d'exécution afin d'utiliser l'objet intermédiaire pour ajouter, supprimer et modifier dynamiquement des noeuds graphiques vectoriels évolutifs dans un Document Object Model, DOM, pour qu'un document HTML exécute une animation en utilisant le navigateur Web ; et
le fait d'opérer un affichage de l'animation sur l'écran de l'ordinateur client.

14. Le procédé selon la revendication 13, dans lequel l'objet multimédia binaire comprend des instructions pour incorporer des objets multimédia enfants.

15. Le procédé selon la revendication 13, dans lequel l'étape de modification des objets d'affichage comprend le fait de créer un nouvel objet d'affichage (1410) dans le cas où un objet d'affichage n'existe pas (1406).
